# EUROPÄISCHE PATENTSCHRIFT

(11) **EP 4 374 484 B1**
(45) Veröffentlichungstag und Bekanntmachung des Hinweises auf die Patenterteilung: **28.10.2026**
(21) Anmeldenummer: 22782474.5
(22) Anmeldetag: 08.09.2022
(51) Int. Cl.: H02K 15/50, H02K 1/16

(54) **STABILISIERTE ENDZONENBEREICHE EINES STÄNDERBLECHPAKETS DURCH SEGMENTE, ELEKTRISCHE MASCHINE UND VERFAHREN ZUR HERSTELLUNG ODER REPARATUR**
STABILISED END ZONE REGIONS OF A LAMINATED STATOR CORE BY SEGMENTS, ELECTRICAL MACHINE AND METHOD OF PRODUCTION OR REPAIR
RÉGIONS DE ZONES D'EXTRÉMITÉ STABILISÉES D'UN NOYAU DE STATOR STRATIFIÉ PAR SEGMENTS, MACHINE ÉLECTRIQUE ET PROCÉDÉ DE PRODUCTION OU DE RÉPARATION

(30) Priorität: 07.10.2021 DE 102021211307
(43) Veröffentlichungstag der Anmeldung: 29.05.2024
(73) Patentinhaber: Siemens Energy Global GmbH & Co. KG, 81739 München (DE)
(72) Erfinder: BELHARETH, Kais, 45475 Mülheim an der Ruhr (DE); MERTE, Ralf, 44225 Dortmund (DE)
(86) Internationale Anmeldenummer: PCT/EP2022/074929
(87) Internationale Veröffentlichungsnummer: WO 2023/057162

(56) Entgegenhaltungen:
- EP-A1- 1 786 087
- EP-A1- 2 642 645
- US-A1- 2014 230 235
- US-A1- 2019 372 429

## Beschreibung

Die Erfindung betrifft stabilisierte Endzonenbereiche eines Ständerblechpakets einer elektrischen Maschine durch Segmente und ein Verfahren zur Herstellung oder Reparatur.

Im Einsatz einer elektrischen Maschine kommt es zum Lösen verbackter und/oder verpresster Blechpaketschichtung und/oder zu Materialausbrüchen in Zahnspitzen einer Blechpaketabtreppung, dem Endzonenbereich des Ständerblechpakets, und dadurch zum Verlust der mechanischen und elektromagnetischen Integrität.

Die Integrität, mechanisch und elektro-magnetisch, ist durch dieses Schadensbild beeinträchtigt, derart, dass es innerhalb kürzester Zeit zum Komplettverlust der Elektromaschine führen kann.

Dies wird durch Ablösen einzelner Bleche der Endzone und weiterführend durch ein schnelles Voranschreiten von Sekundärschäden verursacht. Diese umfassen ein mechanisches Degradieren der benachbarten Endzonenbereiche, eine Schädigung der im Blechpaket gehaltenen Ständerwicklung und deren Isolation, ein thermisches Überlasten durch nicht kontrollierte Einwirkung von Wirbelströmen auf die scharfkantigen Schadbereiche. In der Folge kann es zu Sekundärschäden durch separierte und vagabundierende Blechstücke und Teile der Endzone kommen, ebenso wie zu einem Ständererdschluss durch die Schädigung der Stabisolierung.

Zur Reparatur wurde bei elektrischen Maschinen wie zum Beispiel Generatoren der Tausch des kompletten Ständerblechpaketes gegen ein Neues durchgeführt.

Die Herstellung eines neuen Blechpaketes bei Turbogeneratoren oder Phasenschiebern umfasst in der Regel 12 bis 18 Monate, je nach Komplexität des jeweiligen Maschinen-Designs.

Die US 2014/230235 A1 offenbart in Abbildung 8 ein Segment für die Stabilisierung eines Blechpakets, wobei der Endzonenbereich am Ende eine Abstufung aufweist, wobei das Segment ein Unterteil und ein Oberteil aufweist, insbesondere daraus besteht, wobei das Unterteil mit einer Gegen-Abstufung komplementär zu der Abstufung (1 OB) ausgebildet ist, und das Oberteil auf, insbesondere direkt auf, dem Unterteil angeordnet ist.

Die US 2019/372429 A1 offenbart eine Abstufung des Blechpakets in Umfangsrichtung (Zahn- Nutverlauf), in die ein Segment aus Ober- und Unterteil eingreift, um den Endzonenbereich im Bereich eines Schadens zu stabilisieren.

Es ist daher Aufgabe der Erfindung oben genanntes Problem zu lösen.

Die Aufgabe wird gelöst durch ein Segment für einen stabilisierten Endzonenbereich gemäß Anspruch 1, ein Verfahren gemäß Anspruch 7 und eine elektrische Maschine gemäß Anspruch 8.

In den Unteransprüchen sind weitere vorteilhafte Maßnahmen aufgelistet, die beliebig miteinander kombiniert werden können, um weitere Vorteile zu erzielen.

Es zeigen
- Figur 1: die Ausgangssituation der Erfindung
- Figur 2: ein Unterteil eines Segments
- Figur 3: ein Oberteil eines Segments
- Figur 4, 5, 6, 7: verschiedene Ansichten eines Segments
- Figur 8: Segmente, die einen Ring bilden.

Die Figuren und die Beschreibung stellen nur Ausführungsbeispiele der Erfindung dar.

Die Stabilisierung wird insbesondere durch eine Fixierung der Bleche zueinander durch ein Verkleben mit einer 2-Komponenten-Harzmischung erreicht. Eventuelle Hohlräume, entstanden aus separierten Blechteilen oder anderen Elementen der Endzonenbereiche, werden mit Plomben (Füllstücken) aus glasfaserverstärktem Kunststoff (GFK), mit Vliesmatten und einer 2-Komponenten-Harzmischung fest mit dem Endzonenbereich verbunden.

Bereiche von Einzelblechen, die Separationen aufweisen, werden durch Ausfütterung mit an die Schadbereiche angepassten Platten, insbesondere GFK-Platten aufgefüllt.

Um ausreichend axiale Spannung (Design-abhängig) in den losen Verbund der Endzonenbereiche zu erreichen, können insbesondere zusätzlich speziell für diesen Zweck angefertigte, selbsthemmende Keile in radialen Kühlschlitzen eingetrieben werden.

Die Wiederherstellung der Integrität der Endzonenstruktur, beziehungsweise ein erneuter Verlust von Blechteilen oder sonstigen Elementen der Endzone durch erneutes Ablösen oder Separation wird vermieden durch den Einsatz einer ringförmigen, durch Segmente gebildeten Stützstruktur.

Die einzelnen Segmente sind sowohl durch Formschluss (ähnlich Nut-Feder-Prinzip) miteinander verbunden, als auch durch einen Formschluss zur Keilnut der Ständernuten.

Die Segmente weisen auf oder bestehen jeweils aus einem axial in die Ständernut eingeführten Oberteil und einem radial auf der Abtreppung des Endzonenbereichs aufgesetzten Unterteil. Untereinander verbunden werden die Segmente (Ober- und Unterteil sowie benachbarte Segmente) insbesondere zusätzlich durch ein 2-Komponenten-Harzgemisch.

Um ein axiales Verrutschen zu vermeiden, werden vorzugsweise die Segmente mit einem auf der Abdeckung der Druckfinger angeschweißten, nicht magnetischen Metallwinkel durch eine Stift- oder Schraubverbindung fixiert. Diese verhindert zum einen axiale Bewegungen zum Endschild (Gehäuseende) der Maschine, als auch zum anderen ein radiales Abheben der Segmente vom Abtreppungsbereich des Blechpakets.

### Varianten:

Variante 1: Es kann eine aktive Kühlung des Endzonenbereichs über einen Überströmkanal ermöglicht werden.

Variante 2: Es kann eine aktive Kühlung des Endzonenbereichs durch Aufrechterhalten der vorhandenen radialen Kühlpfade über radiale Bohrungen in den Segmenten ermöglicht werden.

Die vorgestellte Erfindung kann, je nach Fahrweise der Elektromaschine wie z.B. Blind-/Wirkleistungsbetrieb, Grund- /Mittel-/ oder Spitzenlastbetrieb etc., eine Korrekturmaßnahme für den kurzfristigen Überbrückungszeitraum für die Fertigung eines neuen Ständermittelteils/Stators zum Tausch oder als mittelfristige oder ggf. auch als langfristige Stabilisierung des vorgefundenen Schadensbildes zum Einsatz kommen.

### 1. Anwendung im Bereich Turbogeneratoren/Phasenschieber:

Da es keine partielle Reparaturmöglichkeit für eine derartige Schadensausprägung (Teil-/Separation von Blechen und/oder kompletten Teilpaketen von Halb-/Zähnen und/oder Komponenten des Blechpakets und/oder Oberflächenerosion) bzw. diesen Schadensmechanismus (Spannungsverlust im Endzonenbereich des Ständerblechpakets) gibt, wurde bisher im Fall von z.B. bekannten Schäden an Turbogeneratoren das komplette Ständerblechpaket im Generatorgehäuse oder das gesamte Ständermittelteil getauscht.

Bei ganzgetränkten (GVPI) Bauweisen muss dazu ebenfalls die komplette Ständerwicklung erneuert werden. In diesem Fall wird der betroffene Turbosatz für 12 bis 18 Monate außer Betrieb gesetzt, je nach Komplexität des jeweiligen Designs und Verfügbarkeit der benötigten Materialien.

Die vorgestellte Erfindung ermöglicht eine partielle Reparatur In-Situ, bei der z.B. bei Generatoren nur der Generatorläufer gezogen werden muss. Das Generatorgehäuse verbleibt in diesem Fall auf dem Fundament und eine Reparatur findet an den geöffneten Enden des Gehäuses statt. Analoges Vorgehen ist bei Phasenschiebern möglich.

Bei ausreichend Kenntnis über das spezifische Design auch bei Fremdgeneratoren von Wettbewerbern kann eine Reparatur in einem Zeitraum von sechs bis zwölf Wochen durchgeführt werden kann.

### 2. Anwendung im Bereich Elektromaschinen:

Die oben beschrieben Erfindung kann ebenfalls in gleicher Weise zur Anwendung im Bereich Elektromaschinen (Motoren, etc.) kommen, um eine kurzfristige Wiederinbetriebnahme zu ermöglichen.

Generell kann neben den langwierigen Neufertigungszeiträumen eine Einsparung hinsichtlich Ressourcen und Materialien einen wesentlichen Vorteil bringen.

Der Hauptvorteil der Erfindung beruht auf der Tatsache, dass eine durch einen Schaden außer Betrieb genommenen Maschine kurzfristig wieder in Betrieb genommen werden kann, um den Zeitraum für die Fertigung eines Ersatzes für einen nachhaltigen Betrieb zu Überbrücken.

Das ermöglicht dem jeweiligen Kunden und seinem Versicherer eine maximale Verfügbarkeit.

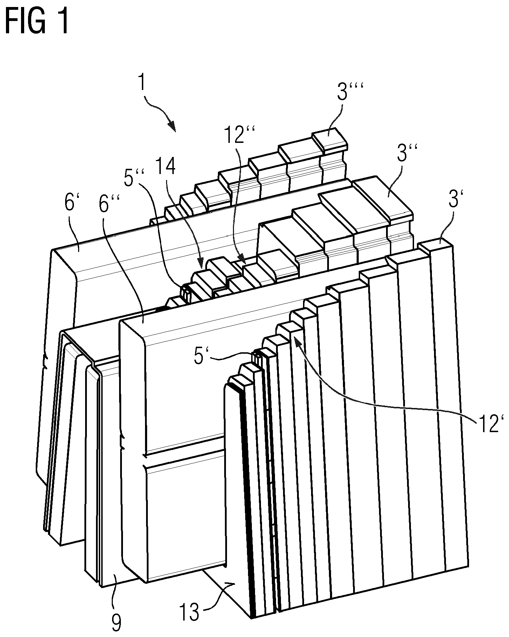

In Figur 1 ist die Ausgangssituation für die Aufgabe der Erfindung dargestellt.

Es ist ein Blechpaket 1 mit verschiedenen Endzonenbereichen 3', 3'', 3‴ eines Ständers dargestellt.

Zwischen den Endzonenbereichen 3', 3", 3‴ ist zur Stützung ein Isolationsmaterial 6', 6" vorhanden, welches durch eine Druckplatte 9 zusammengedrückt wird.

Die einzelnen Endzonenbereiche 3', 3", 3‴ weisen am Ende in Richtung ihrer Stirnseite 13 jeweils eine Abstufung (Abtreppung) 12', 12", ... auf, die für den mittleren Endzonenbereich 3" wie oben beschrieben einen Materialverlust 14 aufweist.

Zwischen den einzelnen Blechpaketen sind ebenfalls Kühlluftzuführungen 5', 5", ... insbesondere nahe der Stirnseite 13 vorhanden.

Die Kühlluftzuführungen 5', 5", ... verlaufen vorzugsweise in radialer Richtung.

Ein nicht näher dargestelltes Gebläse drückt Luft durch die Kühlluftzuführungen 5', 5", ... und bewirkt eine Kühlung.

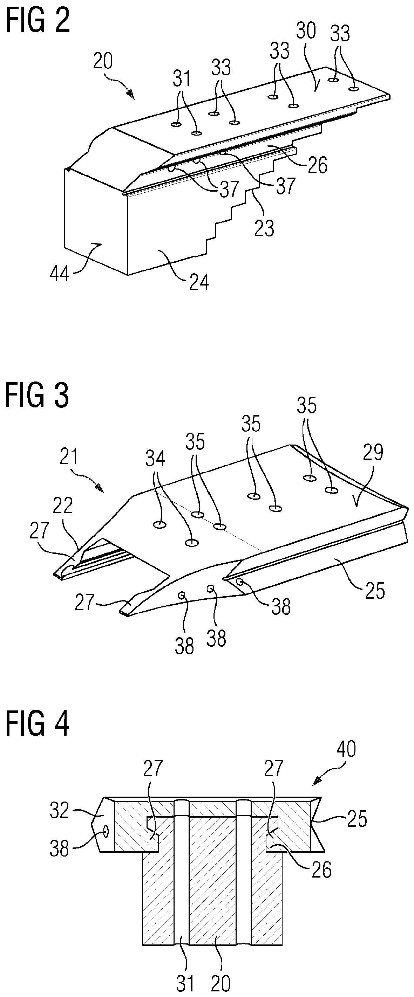

Die Endzonenbereiche 3', 3", ... werden wie folgt durch zweiteilige Segmente 40 (Fig. 4) stabilisiert (Fig. 2-7).

In Figur 2 ist ein Unterteil 20 des Segments 40 gezeigt, was an seiner Unterseite mit einer entsprechenden, zu den Abstufungen 12', 12", ... komplementär ausgebildeten Gegen-Abstufung 23 auf den Endzonenbereich 3', 3", 3‴ ausgelegt wird. Die Gegen-Abstufung 23 des Unterteils 20 kann individuell angepasst werden oder eine Standardgeometrie entsprechend der Originalgeometrie aufweisen.

Im letzteren Fall wird vorzugsweise der Materialverlust 14 wie oben beschrieben ausgeglichen.

Die Breite des Unterteils 20 entspricht vorzugsweise der Breite des Endzonenbereichs 3', 3", 3‴, ....

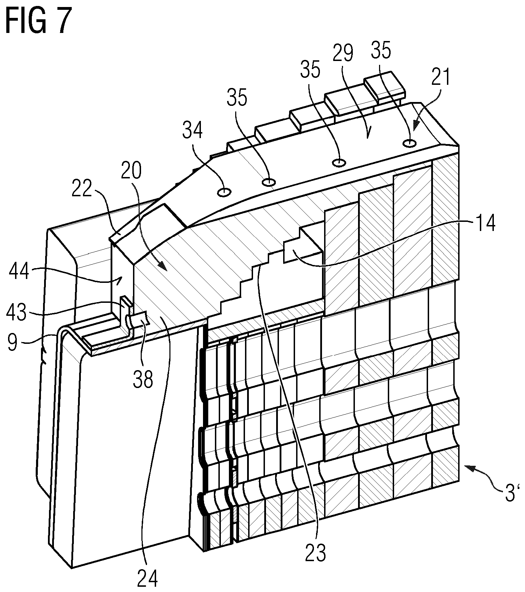

Ein vorderer Teil 24 des Unterteils 20 liegt auf der Abstufung 12, insbesondere auf der Druckplatte 9, auf und geht vorzugsweise über die Stirnseite 13 des Endzonenbereichs 3', 3", 3‴ hinaus (Fig. 7).

Außerdem weist das Unterteil 20 auf seiner ebenen Oberseite 30 vorzugsweise Durchgangslöcher 31 auf, die zu Durchgangslöchern 34 eines Oberteils 21 fluchten (Fig. 3).

Durch die Durchgangslöcher 31 strömt Luft aus den Kühlluftzuführungen 5', 5", ....

Die Durchgangslöcher 31 sind vorzugsweise nahe des vorderen Teils 24 des Unterteils 20 angeordnet.

Vorzugsweise sind das zwei Durchgangslöcher 31, die nebeneinander, also in radialer Umfangsrichtung angeordnet sind.

Die Anzahl und Anordnung der Durchgangslöcher 31 kann variieren.

An der Längsseite des Unterteils 20 sind vorzugsweise axiale Befestigungslöcher 37 vorhanden.

Die Anzahl und Anordnung der axialen Befestigungslöcher 37 kann variieren.

Weiterhin sind auf der Oberseite 30 des Unterteils 20 weitere radiale Befestigungslöcher 33 vorhanden, die mit radialen Befestigungslöchern 35 des Oberteils 21 fluchten.

Die Anzahl und Anordnung können variieren.

An den Längsseiten des Unterteils 20 ist vorzugsweise jeweils eine Einkerbung 26 vorhanden zur Befestigung des Oberteils 21 (Fig. 3) an dem Unterteil 20.

Der Materialverlust 14 kann auch durch das Unterteil 20 ausgeglichen werden.

In Figur 3 ist das Oberteil 21 des Segments 40 dargestellt. Das Oberteil 21 ist flach ausgebildet.

Das Oberteil 21 weist zusätzlich zwei Seitenwände 22 auf, die sich von einer flachen Oberseite 29 erstrecken.

Das Oberteil 21 ist entsprechend breiter als das Unterteil 20 ausgebildet, damit es das Unterteil 20 mit seinen Seitenwänden 22 umgreifen kann.

Das Oberteil 21 wird von vorne oder von hinten auf das Unterteil 20 aufgeschoben und durch eine mechanische Hinterklammerung in radialer Richtung an dem Unterteil 20 gehalten, wie es auch in der Schnittdarstellung gemäß Figur 4 zu erkennen ist.

Dabei greift eine Ausbuchtung 27 an der Innenseite der Seitenwand 22 des Oberteils 21 in die Einkerbungen 26 des Unterteils 20 ein.

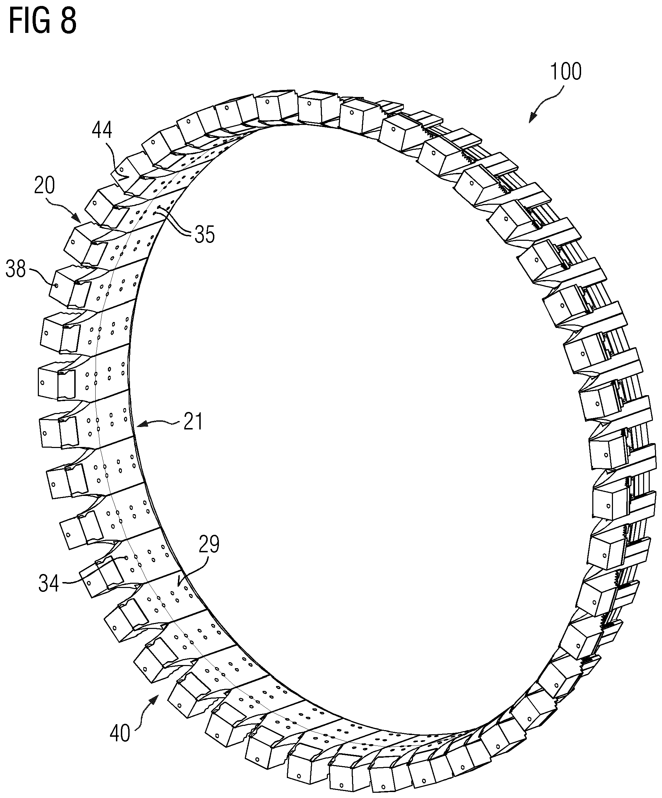

Das Oberteil 21 weist an den Seitenflächen eine Nutfedergeometrie 25, 32 auf, sodass jeweilige benachbarten Oberteile 21 in Umfangsrichtung ineinandergreifen (Figur 8).

Durchgangslöcher 34 auf der Oberseite 29 des Oberteils 21 fluchten mit den Durchganglöchern 31 des Unterteils 20, so dass Kühlluft aus den Kühlluftzuführungen 5 durch das Segment 40 hindurchströmen kann.

An der Längsseite des Oberteils 21 sind axiale Befestigungslöcher 38 vorhanden. Die Anzahl und Anordnung der axialen Befestigungslöcher 38 kann variieren, sind aber zu den axialen Befestigungslöchern 37 des Unterteils 20 ausgerichtet, so dass Befestigungsstifte durch beide Löcher 37, 38 gesteckt werden können und sind.

Weiterhin sind auf der Oberseite 29 des Oberteils 21 weitere radiale Befestigungslöcher 35 als Durchgangslöcher vorhanden. Die Anzahl und Anordnung der radialen Befestigungslöcher 35 kann variieren, sind aber zu den radialen Befestigungslöchern 33 des Unterteils 20 ausgerichtet, so dass radiale Befestigungsstifte in beide Löcher 33, 35 gesteckt werden können.

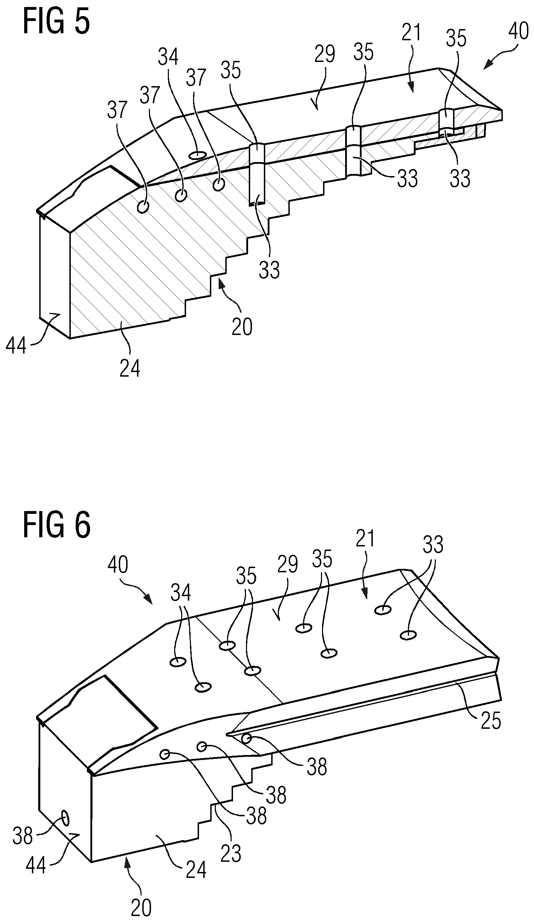

Die Figur 5 zeigt das aus Unterteil 20 und Oberteil 21 zusammengebrachte Segment 40 in anderer Schnittdarstellung mit verschiedenen Durchgangslöchern, die zur Kühlung 31, 34 oder Befestigung 33, 35, 37, 38 dienen.

Figur 6 zeigt das Segment 40 aus Unterteil 20 und Oberteil 21 in Aufsicht.

Am vorderen Teil 24 auf der Stirnseite 44 ist vorzugsweise noch ein Sackloch 38 ausgebildet.

In Figur 7 ist das Segment 40 auf die Ausgangssituation gemäß Figur 1 aufgebracht.

Zu erkennen ist die Fehlstelle 14 durch den Verlust von Material. Diese Fehlstelle 14 wurde jedoch vorab, wie oben beschrieben, schon aufgefüllt.

Ebenso zu erkennen ist ein Winkel 43 auf der Druckplatte 9, an dem die Stirnseite 44 des Unterteils 20 anliegt.

Der Winkel 43 weist ein Durchgangsloch auf, durch das ein Befestigungsstift in das Sackloch 38 des vorderen Teils 24 in der Stirnseite 44 des Unterteils 20 gesteckt werden kann.

Figur 8 zeigt eine Ringkonstruktion mit der oben beschriebenen Stützstruktur aus den Segmenten 40.

Auch auf nicht beschädigte Endzonenbereiche 3', 3", 3‴ werden die Segmente 40 ebenfalls aufgebracht, um eine stabile Ringkonstruktion 100 zu erzielen.

Figur 8 kann eine Anordnung für eine neu hergestellte elektrische Maschine darstellen, aber auch eine reparierte Maschine darstellen.

Bei einer reparierten Maschine müssen die Segmente 40 nicht um den gesamten Umfang verteilt sein.

Ebenso kann die Ringkonstruktion 100 auf eine neue elektrische Maschine aufgebracht werden.

## Patentansprüche

1. Segment (40) für die Stabilisierung eines Endzonenbereichs (3) eines Blechpakets (1) einer elektrischen Maschine,
wobei der Endzonenbereich (3) am Ende eine Abstufung (12) aufweist,
wobei das Segment (40) ein Unterteil (20) und ein Oberteil (21) aufweist,
insbesondere daraus besteht,
wobei das Unterteil (20) mit einer Gegen-Abstufung (23) komplementär zu der Abstufung (12) ausgebildet ist,
und das Oberteil (21) auf,
insbesondere direkt auf,
dem Unterteil (20) angeordnet ist,
**dadurch gekennzeichnet, dass** das Oberteil auf die Oberseite des Unterteils aufgeschoben werden kann und
durch mechanische Hinterklammerung (26, 27) in radialer Richtung festgehalten wird.

2. Segment nach Anspruch 1,
bei dem das Segment (40) im Unterteil (20) und Oberteil (21) durchgehende Kühlkanäle (31, 34) aufweist.

3. Segment nach einem oder beiden der Ansprüche 1 oder 2,
bei dem das Oberteil (21) durch geometrische Mittel,
insbesondere Nutfedergeometrie (25, 32),
zusammen mit weiteren benachbarten Oberteilen (21) verklammert ist.

4. Segment nach einem oder mehreren der Ansprüche 1, 2 oder 3,
bei dem in dem Oberteil (21) Durchgangslöcher (35) und in dem Unterteil (20) Löcher (33),
insbesondere Sacklöcher,
vorhanden sind,
durch die Befestigungsstifte gesteckt sind.

5. Segment nach einem oder mehreren der Ansprüche 1, 2, 3 oder 4,
bei dem ein Winkel (43) im Endzonenbereich (3) befestigt ist,
an dem das Segment (40) anliegt,
und insbesondere durch einen Befestigungsstift durch ein Durchgangsloch im Winkel (43) und ein Loch (38) im Unterteil (20) arretiert ist.

6. Segment nach einem oder mehreren der Ansprüche 1, 2, 3, 4 oder 5, bei dem das Segment (40),
insbesondere Unterteil (20) und Oberteil (21), Kunststoff aufweist,
insbesondere faserverstärkten Kunststoff aufweist, ganz insbesondere daraus besteht.

7. Verfahren zur Herstellung oder Reparatur
eines Endzonenbereichs eines Blechpakets einer elektrischen Maschine,
bei dem um den ganzen Umfang des Ständers im Endzonenbereich (3) Segmente (40) nach einem oder mehreren der vorherigen Ansprüche 1 bis 6 aufgebracht werden,
wobei für eine Reparatur die Fehlstellen (14) im Endzonenbereich (3) aufgefüllt wurden.

8. Neu hergestellte oder überarbeitete elektrische Maschine mit einem stabilisierten Endzonenbereich eines Blechpakets (1),
bei dem um den Umfang,
insbesondere um den gesamten Umfang,
Segmente (40) nach einem oder mehreren der Ansprüche 1, 2, 3, 4, 5 oder 6 aufgebracht sind,
und vorzugsweise eine Ringkonstruktion (100) bilden.

## Claims

1. A segment (40) for stabilising an end zone region (3) of a laminated core (1) of an electrical machine,
wherein the end zone region (3) has a step (12) at the end, wherein the segment (40) has a lower part (20) and an upper part (21),
particularly consists thereof,
wherein the lower part (20) is designed with a counter-step (23) complementary to the step (12),
and the upper part (21) is arranged on,
particularly directly on,
the lower part (20),
**characterised in that** the upper part can be pushed onto the upper side of the lower part and is held in place in a radial direction by mechanical rear clamping (26, 27).

2. The segment of claim 1,
in which the segment (40) has continuous cooling channels (31, 34) in the lower part (20) and upper part (21).

3. The segment of either one or both of claims 1 or 2,
in which the upper part (21) is clamped, by geometric means,
particularly tongue-and-groove geometry (25, 32),
together with further adjacent upper parts (21).

4. The segment of any one or more of claims 1, 2 or 3,
in which in the upper part (21), through-holes (35), and in the lower part (20), holes (33),
particularly blind holes,
are present,
through which fastening pins are inserted.

5. The segment of any one or more of claims 1, 2, 3 or 4,
in which a bracket (43) is fastened in the end zone region (3),
which the segment (40) abuts,
and particularly is locked by a fastening pin through a through-hole in the bracket (43) and a hole (38) in the lower part (20).

6. The segment of any one or more of claims 1, 2, 3, 4 or 5, in which the segment (40),
particularly lower part (20) and upper part (21),
has plastic,
particularly has fibre-reinforced plastic,
more particularly consists thereof.

7. A method of production or repair of an end zone region of a laminated core of an electrical machine,
in which segments (40) of any one or more of the preceding claims 1 to 6 are applied around the entire circumference of the stator in the end zone region (3),
wherein the defects (14) in the end zone region (3) have been filled for repair.

8. A newly produced or overhauled electrical machine with a stabilised end zone region of a laminated core (1),
in which around the circumference,
particularly around the entire circumference,
segments (40) of any one or more of claims 1, 2, 3, 4, 5 or 6 are applied
and preferably form a ring construction (100).

## Revendications

1. Segment (40) pour stabiliser une zone d'extrémité (3) d'un noyau laminé (1) d'une machine électrique,
dans lequel la zone d'extrémité (3) comporte une marche (12) à son extrémité, dans lequel le segment (40) comporte une partie inférieure (20) et une partie supérieure (21), en particulier constitué de celles-ci,
dans lequel la partie inférieure (20) est formée avec une contre-marche (23) complémentaire à la marche (12),
et la partie supérieure (21) étant disposée sur,
en particulier directement sur,
la partie inférieure (20),
**caractérisé en ce que** la partie supérieure peut être enfilée par coulissement sur la face supérieure de la partie inférieure et est maintenue de manière fixe en direction radiale par un verrouillage mécanique par l'arrière (26, 27).

2. Segment selon la revendication 1,
dans lequel le segment (40) présente des canaux de refroidissement (31, 34) continus dans la partie inférieure (20) et la partie supérieure (21).

3. Segment selon l'une ou les deux des revendications 1 ou 2, dans lequel la partie supérieure (21) est solidarisée,
par des moyens géométriques, en particulier une géométrie de rainure et languette (25, 32),
conjointement avec d'autres parties supérieures (21) adjacentes.

4. Segment selon une ou plusieurs des revendications 1, 2 ou 3,
dans lequel des trous passants (35) sont ménagés dans la partie supérieure (21) et des trous (33),
en particulier des trous borgnes,
sont ménagés dans la partie inférieure (20),
trous à travers lesquels sont engagées des goupilles de fixation.

5. Segment selon une ou plusieurs des revendications 1, 2, 3 ou 4,
dans lequel une équerre (43) est fixée dans la région de zone d'extrémité (3),
équerre contre laquelle le segment (40) vient en appui,
et étant arrêté en particulier par une goupille de fixation à travers un trou passant dans l'équerre (43) et un trou (38) dans la partie inférieure (20).

6. Segment selon une ou plusieurs des revendications 1, 2, 3, 4 ou 5,
dans lequel le segment (40),
en particulier la partie inférieure (20) et la partie supérieure (21),
présente de la matière plastique,
présente en particulier
de la matière plastique renforcée de fibres,
est constitué tout particulièrement de celle-ci.

7. Procédé de production ou de réparation d'une région de zone d'extrémité d'un noyau laminé d'une machine électrique,
dans lequel des segments (40) selon une ou plusieurs des revendications précédentes 1 à 6 sont appliqués autour de toute la périphérie du stator dans la région de zone d'extrémité (3),
dans lequel, les emplacements défectueux (14) dans la région de zone d'extrémité (3) ont été remplis pour une réparation.

8. Machine électrique nouvellement produite ou révisée comportant une région de zone d'extrémité stabilisée d'un noyau laminé (1),
dans laquelle des segments (40) selon une ou plusieurs des revendications 1, 2, 3, 4, 5 ou 6 sont appliqués autour de la périphérie, en particulier autour de la totalité de la périphérie,
et forment de préférence une structure annulaire (100).
